# EUROPEAN PATENT SPECIFICATION

(11) **EP 4 604 813 B1**
(45) Date of publication and mention of the grant of the patent: **09.09.2026**
(21) Application number: 23800535.9
(22) Date of filing: 05.10.2023
(51) Int. Cl.: A47J 31/46, A47J 31/44

(54) **DISPENSING GROUP FOR DISPENSING HOT WATER AND STEAM, COFFEE MACHINE, RECIRCULATION METHOD, AND METHOD FOR DISPENSING HOT WATER**
AUSGABEGRUPPE ZUR AUSGABE VON HEISSWASSER UND DAMPF, KAFFEEMASCHINE, REZIRKULATIONSVERFAHREN UND VERFAHREN ZUR AUSGABE VON HEISSWASSER
GROUPE DE DISTRIBUTION POUR DISTRIBUTION D'EAU CHAUDE ET DE VAPEUR, MACHINE À CAFÉ, PROCÉDÉ DE RECIRCULATION ET PROCÉDÉ DE DISTRIBUTION D'EAU CHAUDE

(30) Priority: 18.10.2022 IT 202200021441
(43) Date of publication of application: 27.08.2025
(73) Proprietor: Illycaffe' S.p.A., 34147 Trieste (IT)
(72) Inventor: BRACICH, Christian, 34147 Trieste (IT); PIRAS, Riccardo, 34147 Trieste (IT); CESCUTTI, Francesco, 34147 Trieste (IT); FERRARI, Marco, 34147 Trieste (IT); RONCALI, Eugenio, 34147 Trieste (IT)
(74) Representative: Crippa, Paolo Ernesto
(86) International application number: PCT/IB2023/060009
(87) International publication number: WO 2024/084323

(56) References cited:
- EP-A1- 3 912 523
- WO-A1-2011/145064
- US-A1- 2018 213 969
- US-A9- 2022 313 010

## Description

### Field of application

The present invention relates to a dispensing group for dispensing hot water and steam, for example and not necessarily, for a coffee machine.

In particular, the present invention belongs to the field of the distribution of hot beverages, at a professional level, e.g., for coffee shops, restaurants, and automatic vending machines or, at a domestic level, e.g., for domestic use.

Integrated hot water and steam distribution systems in the same dispensing group are known in the art. The document WO 2011/145064 A1 discloses a device for producing hot water and steam. Generally, the known dispensing groups consist of a single fluidic conduit, which supplies two dispensing nozzles, for alternately dispensing hot water and steam.

Typically, in fact, known dispensing groups do not allow dispensing hot water or dispensing steam at different times because, as they generally have a single fluidic conduit supplying both dispensing operations, the water flow rates in the circuit are not sufficient to supply both dispensing operations, and it is simultaneously complicated and costly to heat and pump water in the same fluidic conduit at two different temperatures.

Moreover, boilers or storage boilers are often used in the known dispensing systems, in which great amounts of heated water are stored, in the same volume, which remains in the respective storage tank for a long time before being dispensed.

It is known that such systems can develop bacteriological loads, and even if the problem is under control and the known boilers largely respect the health and safety standards, such systems require a specific control of the microbiological risk.

Moreover, such a drawback forces users to perform continuous and frequent cleaning cycles, with consequent waste in terms of time and resources.

### Solution of the invention

Thus, the need is strongly felt to provide a hot water and steam dispensing group capable of overcoming the drawbacks typical of the state-of-the-art.

In particular, it is the object of the present invention to improve the steam and water dispensing efficiency, and in particular to allow simultaneously dispensing hot water and steam.

Such a need is met by a dispensing group, a coffee machine, a recirculation method, and a method for dispensing hot water according to the appended claims. The claims dependent thereon describe preferred or advantageous embodiments of the invention, involving further advantageous aspects.

### Description of the drawings

The features and advantages of the dispensing group, the coffee machine, the recirculation method, and the dispensing method will however become apparent from the following description of some preferred embodiments thereof, given by way of non-limiting indications, with reference to the accompanying drawings, in which:
- figure 1 shows a fluidic circuit diagram of a dispensing group according to an embodiment of the present invention;
- figure 2 shows a fluidic circuit diagram of a first fluidic conduit of a dispensing group according to an embodiment of the present invention;
- figure 3 shows a fluidic circuit diagram of a second fluidic conduit of a dispensing group according to an embodiment of the present invention;

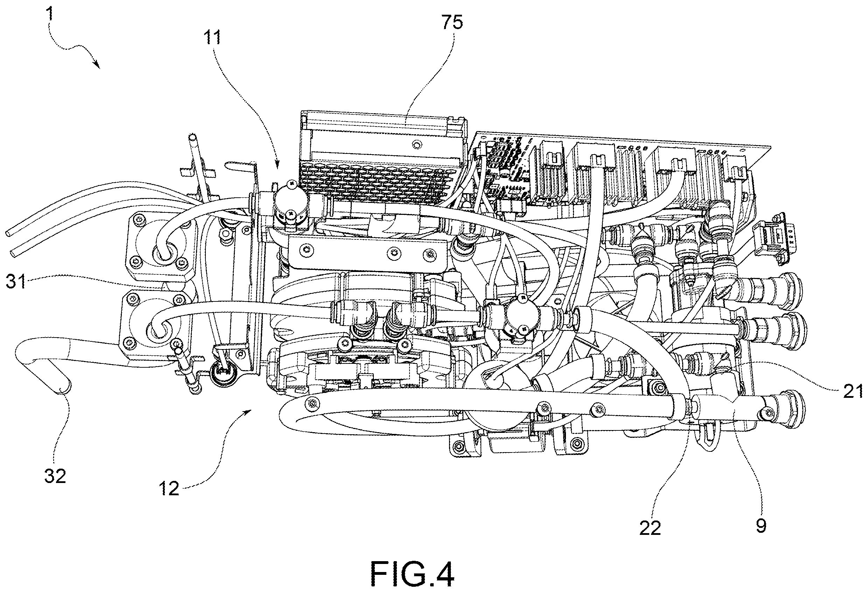

- figure 4 shows a perspective view of a dispensing group according to an embodiment of the present invention;
- figure 5a shows a lateral perspective view of a first fluidic conduit of a dispensing group according to an embodiment of the present invention;
- figure 5b shows a further lateral perspective view of the first fluidic conduit in figure 5a;
- figure 5c shows a view from above of the first fluidic conduit in figure 5a;
- figure 6 shows a lateral perspective view of a second fluidic conduit according to an embodiment of the present invention;
- figure 7 shows a perspective view of a dispensing group of the present invention, in an embodiment of the present invention;
- figure 8 shows a perspective view of the dispensing group in figure 7, depicting the collection conduit arranged at a cup holder unit, according to an embodiment of the present invention;
- figure 9 shows a perspective view of a coffee machine according to an embodiment of the present invention;
- figure 10 shows a fluidic circuit diagram of a dispensing group according to a further embodiment of the present invention.

### Detailed description

With reference to the aforesaid figures, reference numeral 1 globally denotes a dispensing group 1 for dispensing hot water and steam.

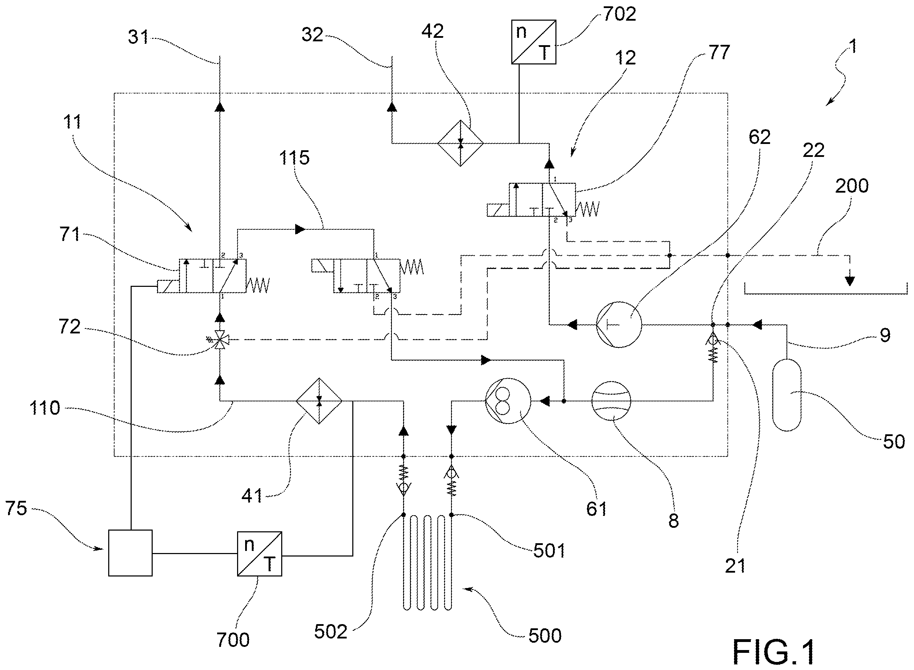

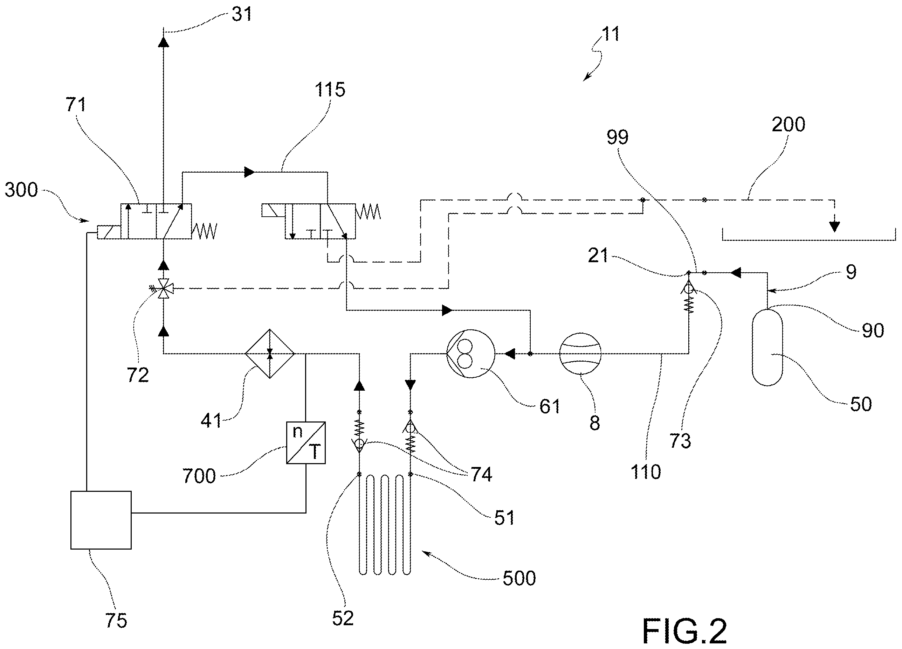

According to the invention, and with reference to the illustrative embodiment in figure 1, the dispensing group 1 comprises a first fluidic conduit 11 comprising a main branch 110, extending between a first water inlet opening 21 and a hot water dispensing opening 31. Figure 2 shows an embodiment of such a first fluidic conduit 11 insulated from the remaining part of the dispensing group.

The main branch 110 is suitable for receiving water through said first water inlet opening 21 and for allowing such water to flow towards the hot water dispensing opening 31.

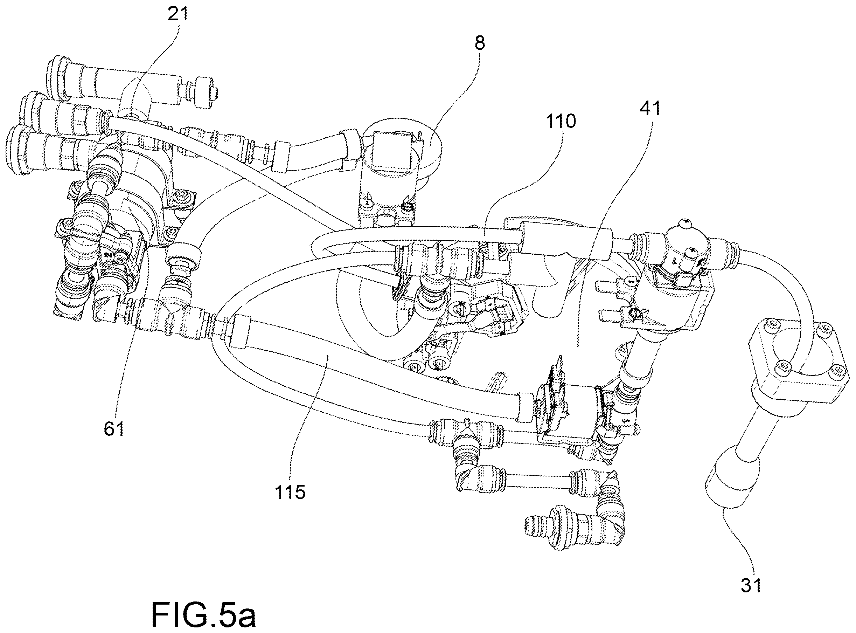

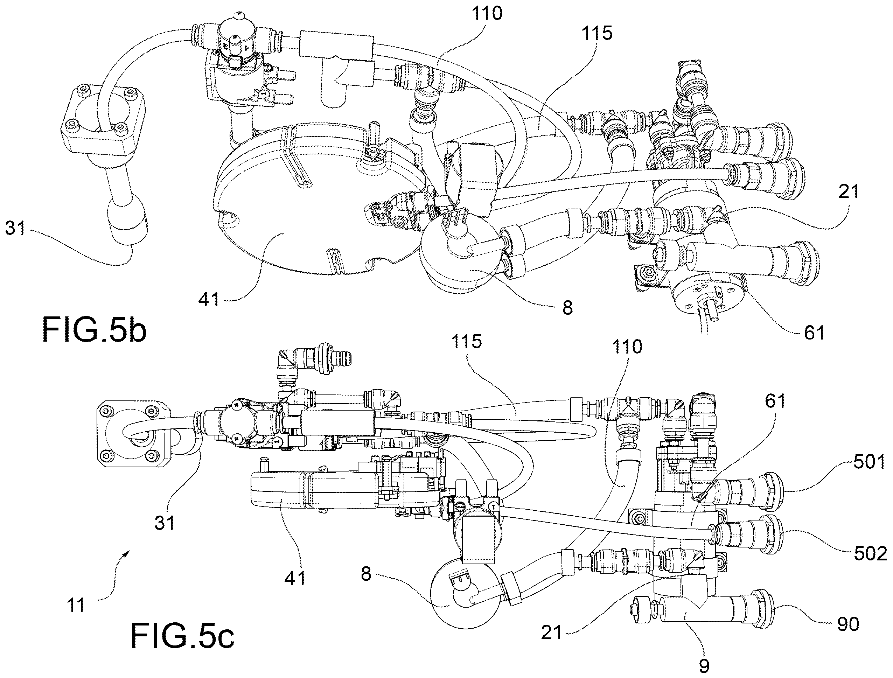

Preferably, as shown, for example, in figures 5a, 5b and 5c, the hot water dispensing opening 31 is connected to, or obtained in a hot water outlet nozzle, designed to direct a flow of hot water to a collection container, e.g., a cup or a glass.

Moreover, according to the invention, the dispensing group 1 comprises a first heating device 41, operatively connected to the main branch 110 and suitable for heating the water flowing into such a main branch 110, before it reaches the hot water dispensing opening 31.

In an embodiment of the invention, the first heating device 41 is installed close to the hot water dispensing opening 31.

Preferably, the first heating device 41 is an instantaneous heater, even more preferably, it is a heater of the FTH (*Flow Through Heater*) type.

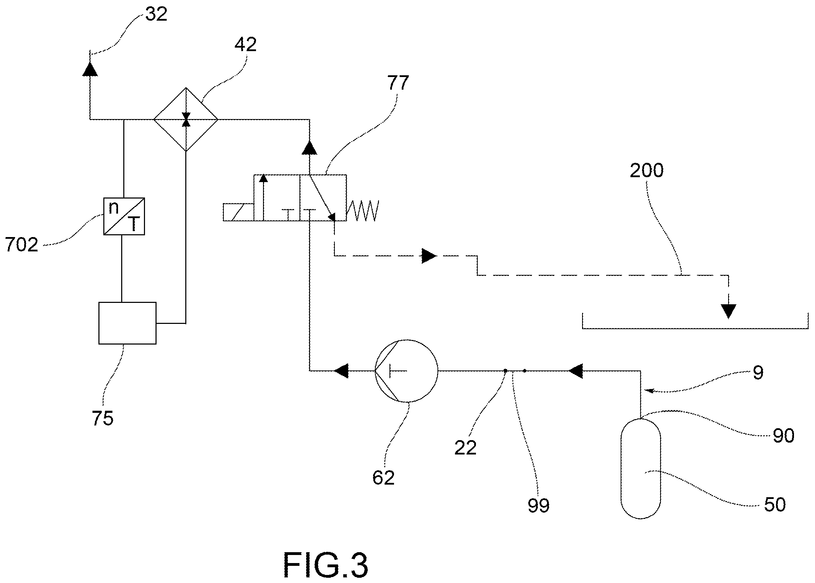

According to the invention, the dispensing group 1 also comprises a second fluidic conduit 12 extending between a second water inlet opening 22 and a steam dispensing opening 32. Figure 3 shows an embodiment of such a second fluidic conduit 12 isolated from the remaining part of the dispensing group.

Such a second fluidic conduit 12 is suitable for receiving water through such a second water inlet opening 22 and allowing such water to flow towards the steam dispensing opening 32.

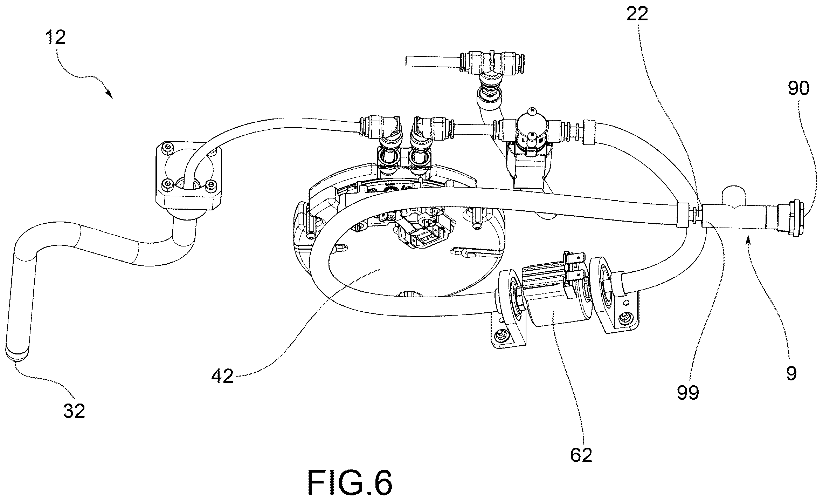

Preferably, as shown, for example, in figure 6, the steam dispensing opening 32 is connected to, or obtained in a steam outlet nozzle, designed to direct a flow of steam into a fluid contained in a collection container, e.g., a cup or a glass, or a pan, containing milk.

The dispensing group 1 further comprises a second heating device 42, operatively connected to the second fluidic conduit 12 and suitable for heating the water flowing into said second fluidic conduit 22 to generate steam, before it reaches the steam dispensing opening 32.

In an embodiment of the invention, the second heating device 42 is installed close to the steam dispensing opening 32.

Preferably, the second heating device 42 is an instantaneous heater, even more preferably, it is a heater of the FTH (*Flow Through Heater*) type.

According to an aspect of the present invention, as shown in the illustrative embodiments in figures 1, 2 and 10, the first fluidic conduit 11 comprises a recirculation branch 115, which fluidically originates from said main branch 110 downstream of the first heating device 41 and upstream of the hot water dispensing opening 31 and which is fluidically reintroduced into said main branch 110, upstream of said first heating device 41.

In this document, the expressions "upstream" and "downstream" are always used with reference to the flow direction of water from the first and second water inlet openings 21, 22 towards the hot water dispensing opening 31 or towards the steam dispensing opening 32, respectively.

Moreover, according to a further aspect of the invention, the first fluidic conduit 11 and the second fluidic conduit 12 are fluidically and thermally separate from each other in the path thereof respectively between the first water inlet opening 21 and the hot water dispensing opening 31 and between the second water inlet opening 22 and the steam dispensing opening 32.

In other words, according to the present invention, the dispensing group 1 comprises two fluidic conduits, which are kept fluidically and thermally separate from each other, the first fluidic conduit 11, for producing and dispensing hot water, and the second fluidic conduit 12, for producing and dispensing steam.

The definition "fluidically separate" is understood to mean that such first and second fluidic conduits 11, 12 do not have fluidic nodes in common along the respective path thereof. That is, for example, the water entering the first fluidic conduit 11 cannot reach the second fluidic conduit 12, and vice versa.

The definition "thermally separate" is understood to mean that such first and second fluidic conduits 11, 12 do not directly influence each other, i.e., they do not contribute directly to heating or, more generally, to varying the temperature of the other, or of the water flowing therein. In other words, for example, the first heating device 41 only thermally influences the water passing in the first fluidic conduit 11. Likewise, the second heating device 42 only thermally influences the water passing in the second fluidic conduit 12.

In an embodiment, illustrated in detail in the document below, the second fluidic conduit 12 is only indirectly influenced - passively - along a heated stretch 120 by the preheated hot water flowing in the first fluidic conduit 11 (in particular, stored in the collection conduit 500, which will be described below in this document).

Moreover, according to an advantageous embodiment, the first heating device 41 and the second heating device 42 are completely disconnected from each other both fluidically and thermally.

In an advantageous embodiment, the first fluidic conduit 11 comprises a first pump 61, preferably a rotary pump, installed upstream of the heating devices 41 and suitable for pushing water into the main branch 110 towards said heating devices 41.

In a particularly advantageous embodiment, the recirculation branch 115 is reintroduced into the main branch 110 upstream of said first pump 61.

In other words, according to an advantageous aspect, the present invention provides that the first fluidic conduit 11 for dispensing hot water is equipped with a recirculation, i.e., it is suitable for recirculating preheated water by means of the first heating device 41, through said recirculation branch 115, and reintroducing such a preheated water into the main branch 110, preferably upstream of the first pump 61.

Advantageously, by virtue of the presence of the recirculation branch, which always provides a certain flow of preheated water for the dispensing, the dispensing group according to the present invention is capable of significantly reducing the time for dispensing hot water at a high temperature.

For example, by means of the first heating device 41 it is possible to preheat water to about 60°C and send it into recirculation in the recirculation branch 115, subsequently reaching the main branch 110 again.

Thereby, when the dispensing of hot water, typically boiling water, is requested, preferably about 90-95°C, for preparing hot beverages, such as teas or herbal drinks, it is possible to apply a reduced final heating to the previously preheated water, by means of the first heating device 41.

Advantageously, such a feature of the dispensing group also allows utilizing heating devices with reduced powers, as compared to the typical heaters of the prior art, at the same required dispensing temperature.

Moreover, by virtue of the presence of the first pump 61 it is advantageously possible to regulate the hot water dispensing time by acting both on the power of the first heating device 41 and on the power of the first pump 61.

In an embodiment of the invention, with reference to figure 2, the recirculation branch 115 fluidically originates from the main branch 110 downstream of the first heating device 41 and upstream of the hot water dispensing opening 31 at an emission node 300 of the main branch 110.

In a constructional variant, the first fluidic conduit 11 comprises a flow regulating element 71 at said emission node 300, suitable for regulating the water flow from the main branch 110 towards the hot water dispensing opening 31 or towards the recirculation branch 115.

In an advantageous embodiment, such a flow regulating element 71 is a three-way valve.

In a preferred embodiment, the dispensing group 1 comprises an electronic control unit 75 operatively connected to said flow regulating element 71 and configured to process and send, to said flow regulating element 71:
- a dispensing signal for allowing water to pass from the main branch 110 towards the hot water dispensing opening 31; or
- a recirculation signal for allowing water to pass from the main branch 110 towards the recirculation branch 115.

According to a further embodiment, the electronic control unit 75 is connected to a user interface by means of which a user can send, to the dispensing group, a hot water dispensing command, and he/she can also manually command the flow regulating element 71 to regulate the passage of water towards the hot water dispensing opening or towards the recirculation branch.

In an embodiment, the dispensing group 1 comprises a tank 50, preferably containing water at room temperature or cold water, fluidically connected to the first fluidic conduit 11 by means of the first water inlet opening 21, and to the second fluidic conduit 12 by means of the second water inlet opening 22.

In other words, in such an embodiment, each fluidic conduit 11, 12 is directly connected to the tank 50 by means of the respective water inlet opening 21, 22.

In an embodiment, for example shown in figures 1, 2 and 3, the dispensing group 1 comprises a connection conduit 9 having a first end 90, fluidically connected to the tank 50, which is suitable for containing water, and a second end 99, fluidically connected to the first fluidic conduit 11 and to the second fluidic conduit 12 by means of the first 21 and the second water inlet opening 22, respectively. Said connection conduit 9 is suitable for indirectly connecting the first fluidic conduit 11 and the second fluidic conduit 12 to the tank 50.

Preferably, the first opening 21 and the second water inlet opening 22 are therefore both connected to the same second end 99 of the connection conduit 9.

Preferably, a regulating valve is installed at such a second end 99, which is suitable for regulating the flow of water from the tank 50 towards the first fluidic conduit 11 through said first water inlet opening 21, and/or towards the second fluidic conduit 12 through said second water inlet opening 22.

In an advantageous embodiment, the regulating valve is suitable for allowing the flow in both the first fluidic conduit 11 and the second fluidic conduit 12.

Thereby, advantageously, also by virtue of the separation between the two fluidic conduits 11 and 12 and by virtue of the presence of the thermally separate first heating device 41 and second heating device 42, the simultaneous dispensing of hot water is allowed by means of the hot water dispensing opening 31, and steam by means of the steam dispensing opening 32.

Moreover, a non-return valve 73 is preferably installed at the first water inlet opening 21, suitable for blocking the return of the water entering the first fluidic conduit 11, towards the tank 50 or towards the second fluidic conduit 12.

In an embodiment, the second fluidic conduit 12 comprises a second pump 62, preferably a volumetric pump, installed upstream of the second heating device 42 and suitable for pushing water into the second fluidic conduit towards said second heating device 42.

In an embodiment, the dispensing group 1 comprises one or more steam temperature sensors 702, installed on the second fluidic conduit 12 and configured to detect the temperature of the water in the second fluidic conduit 12, upstream of the second heating device 42, close thereto.

Preferably, the electronic control unit 75 is connected to said one or more steam temperature sensors 702 and is configured to regulate the flow rate passing from the second heating device 42 as a function of the temperature detected by said one or more steam temperature sensors 702.

Preferably, the flow rate passing from the second heating device 42 is regulated by acting on the power of the second pump 62.

In a constructional variant, the dispensing group 1 further comprises a flow rate measurer 8, e.g., a flow meter installed on the first fluidic conduit 11.

Preferably, such a flow rate measurer 8 is installed on the main branch 110, even more preferably, upstream of the first pump 61.

In an embodiment, the recirculation branch 115 is reintroduced into the main branch 110 downstream of said flow rate measurer 8 and upstream of the first pump 61.

In a constructional variant, the dispensing group comprises a flow rate measurer 8 installed on the connection conduit 9.

In an advantageous embodiment, the first fluidic conduit 11 and the second fluidic conduit 12 are separate at least from a node downstream of the flow rate measurer 8.

In a particularly advantageous embodiment, with reference to figures 1 and 2, the main branch 110 comprises a collection conduit 500, between the first pump 61 and the first heating device 41, suitable for accumulating water preheated by the heating device 41 and reintroduced into the main branch 110 by means of the recirculation branch 115.

The collection conduit 500 being at least partially thermally conductive to allow the transmission of heat of the heated hot water stored in the collection conduit 500, towards the environment.

In other words, the collection conduit 500 is at least partially not insulated, i.e., it comprises at least one exchange wall 550 suitable for allowing the heat exchange between the water heated inside the collection conduit 500 and the environment, through said exchange wall 550.

More generally, the expression "towards the environment" is understood to mean "towards the outside of the collection conduit", i.e., towards any chamber, or element, arranged outside said conduit.

Preferably, the whole outer wall of the collection conduit is suitable for allowing the heat exchange, i.e., the whole collection conduit is not insulated.

Advantageously, by virtue of such a feature, the heated water stored in the collection conduit 500 can be exploited for a dual purpose: on the one hand, a certain flow of preheated water is provided to allow hot water to be dispensed more quickly at a high temperature, on the other hand, the use of the heat of combustion of the water heated in the collection conduit 500 is allowed to transmit heat passively to elements close to such a collection conduit, which need to be heated, like other fluidic conduits or further elements of the dispensing group, such as cup holder units, for example, as is better explained in the document below.

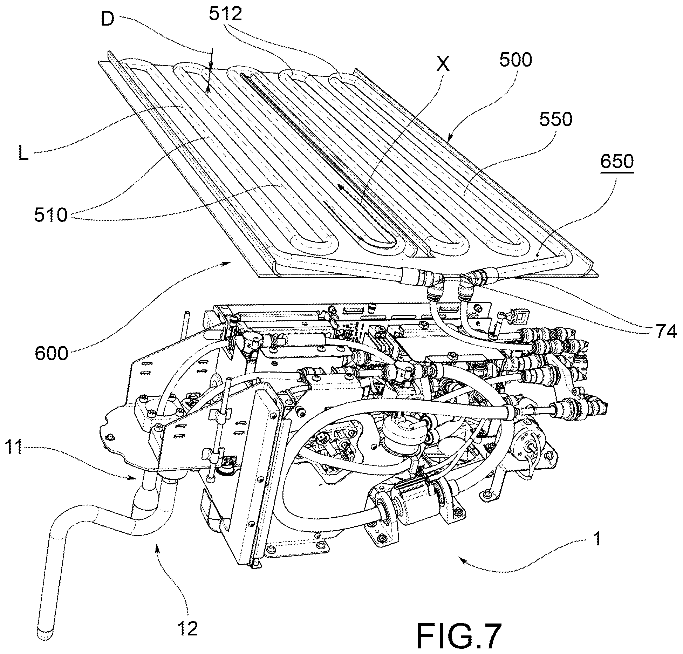

In an advantageous variant and with reference to figure 7, the collection conduit 500 is a tube extending for a collection length L along a prevalent flow direction X and having a cross-section on a plane transversal to said prevalent flow direction X, which is defined by a transversal dimension D, wherein said collection length L is much greater than said transversal dimension D.

For example, the collection conduit 500 is a tube having a collection length L along the prevalent flow direction X and having a circular cross-section defined by a diameter D, wherein the length L is much greater than the diameter D. In other words, the collection conduit is a long and narrow tube.

Preferably, the collection length L is at least ten times the transversal dimension D, preferably at least fifty times the transversal dimension D, even more preferably, at least one hundred times the transversal dimension D.

Clearly, prevalent flow direction X does not only mean a linear direction, but it also refers to a sinuous direction, e.g., to a curved, or broken, or mixed trajectory, comprising linear, and/or curved and/or broken stretches, which follows the direction of the water flow in the conduit.

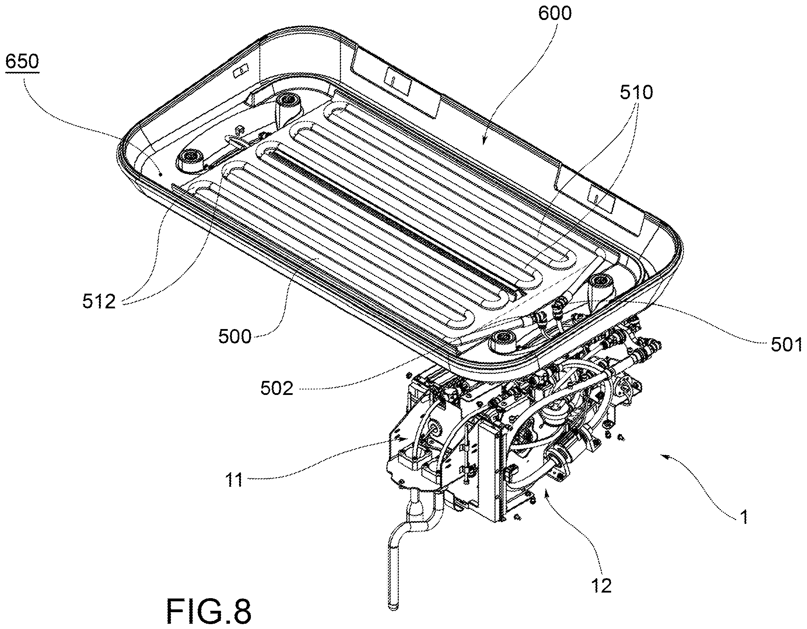

In a preferred constructional variant, with reference to figures 7 and 8, the collection conduit 500 has a snakelike development, i.e., it forms a fluidic serpentine, comprising linear stretches 510 interspersed with curvilinear stretches 512.

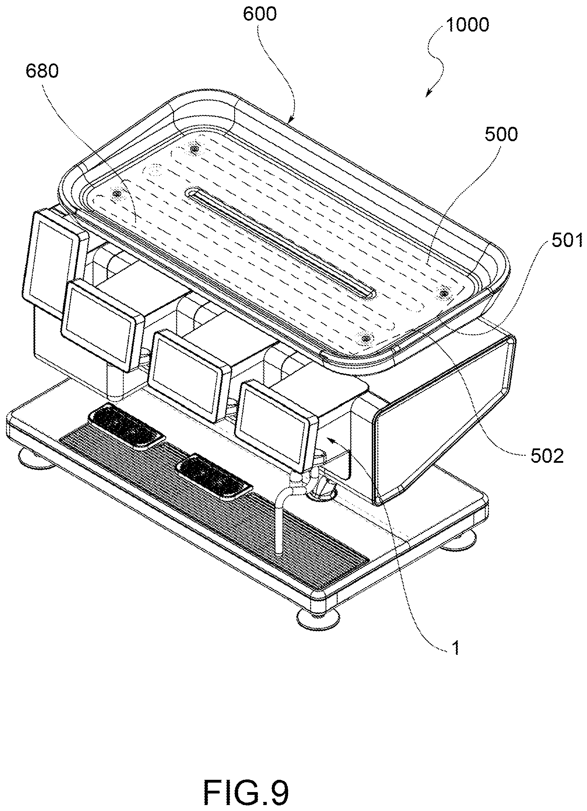

Moreover, in a particularly advantageous embodiment shown for example in figures 8 and 9, the dispensing group 1 comprises a cup holder unit 600, e.g., a tray or a cup holder plate, positioned close to the collection conduit 500 so that the heating of at least one surface of said cup holder unit 600 is allowed by means of the transmission of heat from the water contained in said collection conduit 500 towards said cup holder unit 600.

In an embodiment, such a cup holder unit 600 comprises at least one contact wall in contact with said collection conduit 500, preferably in contact with the aforesaid exchange wall 550.

In an embodiment, such a cup holder unit 600 comprises therein a heating chamber 650, said heating chamber 650 being suitable for accommodating said collection conduit 500.

Preferably, such a heating chamber 650 is closed at the top by means of a cup holder plate 680, so as to conceal the collection conduit 500 from the user's sight. Such a cup holder plate 680 is suitable for resting mugs, cups, glasses, to be heated.

In an embodiment, the collection conduit 500 extends from a first end 501 to a second end 502.

Preferably, the first fluidic conduit 11 at said first and second ends 501, 502, comprises non-return valves 74 suitable for being opened and closed, respectively, for allowing or blocking the passage of preheated water from the recirculation branch towards the collection conduit 500 and from the collection conduit 500 towards the first heating device 41.

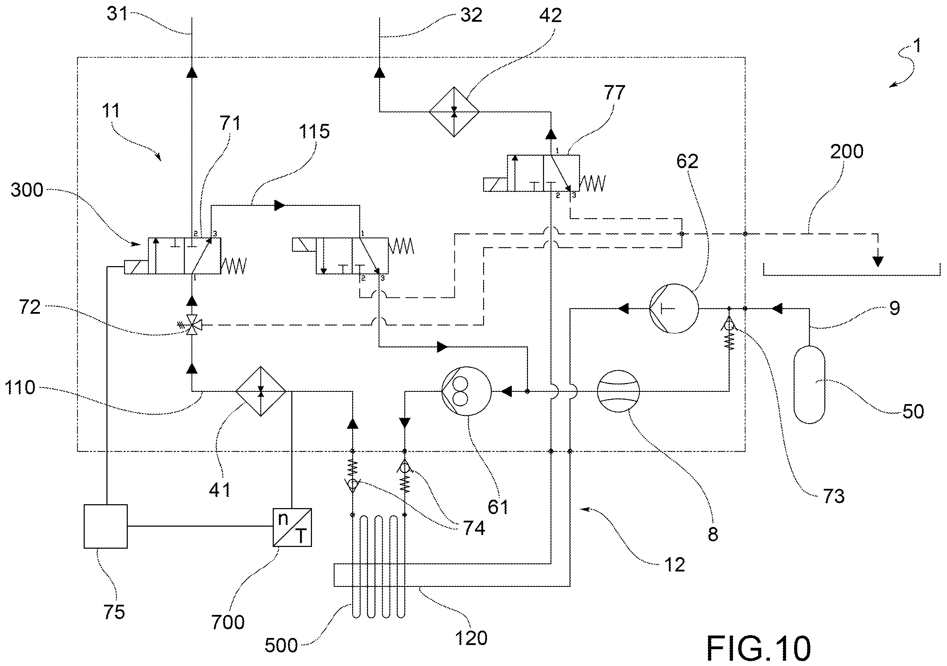

In an embodiment of the invention, shown in the implementation example in figure 10, the second fluidic conduit 12, designed for producing steam, comprises a preheating stretch 120 passing close to the collection conduit 500.

In such an embodiment, the collection conduit 500 is suitable for allowing the heat transfer from the water preheated therein, to the preheating stretch 120, so as to also allow a minimum preheating of the water flowing into the second fluidic conduit 12.

Thereby, the dispensing of steam is also facilitated and, at the same final dispensing temperature, it allows using a heater with reduced power if compared to the heaters used in the prior art for generating steam.

In an embodiment, the dispensing group 1 further comprises an overpressure relief valve 72 installed on the first fluidic conduit 11, preferably downstream of the first pump 61, even more preferably downstream of the collection conduit 500.

In an embodiment, the dispensing group comprises a discharge branch 200, fluidically connectable to the first fluidic conduit 11 and/or to the second fluidic conduit 12 for allowing water and/or steam to be released, if necessary.

Preferably, such an overpressure relief valve 72 is suitable for regulating the flow of hot water from the main branch 110 towards the hot water dispensing opening 31, or towards the recirculation branch 115 or towards the discharge branch 200, where necessary.

In an embodiment, the dispensing group 1 comprises a steam regulating element 77 installed on the second fluidic conduit 12, preferably downstream of the second pump 62.

Preferably, such a steam regulating element 77 is suitable for regulating the water flow towards the steam dispensing opening 32, preferably flowing from the second heating device 42, or towards the discharge branch 200.

It is apparent that the dispensing group claimed is suitable for operating as an independent unit or for being integrated into household appliances with other functionalities, e.g., integrated into a domestic or professional coffee machine.

With reference to figure 9, the present invention also relates to a coffee machine 1000 comprising a coffee dispensing unit and a dispensing group 1 for dispensing hot water and steam according to the present invention.

The present invention further relates to a recirculation method comprising the following steps:
a) providing a dispensing group 1 according to an embodiment of the present invention;
b) allowing water to pass into the main branch 110 from the first water inlet opening 21 towards the hot water dispensing opening 31;
c) by means of the first heating device 41, preheating the water flowing into said main branch 110 to generate an amount of water preheated at a predetermined preheating temperature;
d) blocking the passage of said amount of preheated water towards the hot water dispensing opening 31 and allowing said amount of preheated water to pass from the main branch 110, downstream of the first heating device 41, into the recirculation branch 115;
e) reintroducing said amount of preheated water from the recirculation branch 115 into the main branch 110 upstream of said first heating device 41.

The present invention also relates to a method of dispensing hot water, comprising the following steps:
f) performing a method of recirculating preheated water according to the present invention;
g) providing an electronic control unit 75 operatively connected to the dispensing group 1;
h) by means of the electronic control unit 75, preferably, in response to a hot water dispensing command sent by a user, preferably sending, by means of a user interface, a hot water dispensing signal to the dispensing group 1;
i) as a function of said hot water dispensing signal, by means of the first heating device 41, performing a final heating of a volume of water to be dispensed, comprising the amount of preheated water reintroduced into the main branch 110 and/or an amount of unheated water entering the main branch 110 from the first water inlet opening 21 to bring it to a predetermined dispensing temperature;
j) allowing water heated at the predetermined dispensing temperature to pass through the hot water dispensing opening 31.

It is apparent that, depending on the volume of water required for the dispensing, the amount of preheated water might, or might not be enough to ensure the dispensing of such a volume. It is apparent that the method provides that, at the same time as the dispensing, the main branch 110 continues to receive water entering through the first water inlet opening 21.

Thereby, on the one hand, the constant filling of the main branch 110 is advantageously ensured, avoiding the formation of air bubbles, which would be detrimental to the operation of the heating device. Advantageously, at the same time, such a system theoretically allows the dispensing group to dispense any volume of hot water without stoppages.

Therefore, in an embodiment, the first heating device 41 must be suitable for performing the final heating of a certain amount of water, which is at a preheating temperature, e.g., 60°C, and of a certain amount of water, which is at a reduced temperature instead, e.g., at room temperature, and bring both such amounts of water to a predetermined dispensing temperature, e.g., 90°C.

In an embodiment, step i) comprises the following sub-steps:
i1) providing a temperature sensor 700 suitable for detecting the temperature of the water at the first heating device 41, operatively connected to the electronic control unit 75;
i2) by means of the electronic control unit 75, making a comparison between the temperature detected by said temperature sensor and a minimum preheating temperature;
i3) as a function of said comparison, performing one of the following actions:
i31) if the temperature detected is greater than or equal to said minimum preheating temperature, heating the water by means of the first heating device 41 on a maximum water flow rate, to bring it to the dispensing temperature;
i32) if the temperature detected is less than the minimum preheating temperature, heating the water by means of the first heating device 41 on a water flow rate that is lower than the maximum flow rate, to bring it to the dispensing temperature.

In other words, with the same power, the first heating device 41 is suitable for heating a reduced flow of water - and consequently producing a slower exiting flow of hot water - when the temperature of the water to be heated is below the minimum preheating temperature, and, on the contrary, it is suitable for heating a greater flow of water - and consequently, producing a faster exiting flow of hot water - when the temperature of the water to be heated is at least at the minimum preheating temperature.

Clearly, this is due to the fact that, with the same power and working with previously preheated water, the first heating device 41 must perform thereon a reduced heating, and therefore, advantageously, it is able to process a greater flow at the dispensing temperature in a shorter time.

Preferably, after step j), the method of dispensing hot water includes performing the recirculation method again, so as to immediately provide an amount of preheated water for a subsequent dispensing.

Preferably, moreover, the recirculation is also started after not using the dispensing group for a certain time, so as to prevent the deposit and growth of bacterial agents or pathogens in the conduit.

It is apparent that the recirculation is preferably started during the non-working steps of the dispensing group, i.e., when the dispensing of hot water and steam is not required.

It is equally apparent that the method of dispensing hot water can take place at the same time as a method of dispensing steam, consisting of the following steps:
a) providing a hot water and steam dispensing group 1 according to the present invention;
m) dispensing water into the second fluidic conduit 12 through the second water inlet opening 22;
n) by means of the second heating device 42, heating the water in the second fluidic conduit 12 at a steam dispensing temperature, so as to generate steam;
o) dispensing steam by means of the steam dispensing opening 32.

Innovatively, the present invention solves the drawbacks of the typical dispensing groups of the prior art.

Advantageously, by virtue of the technical features described in this document, in fact, the dispensing group according to the present invention allows significantly improving the efficiency of the dispensing system for dispensing water and steam.

Advantageously, by virtue of the presence of two fluidic branches, which are completely fluidically and thermally separate, the dispensing group according to the present invention allows simultaneously dispensing hot water and steam at the standard dispensing flow rates.

According to a further advantage, the provision of two fluidically and thermally separate fluidic branches allows operating on the parameters for dispensing hot water and steam (such as, the flow rate, temperature, pressure, dispensing speed, for example) completely independently.

Clearly, this allows regulating each dispensing according to the user's specific needs without influencing the parameters of the dispensing, taking place in parallel.

According to an even further advantage, by virtue of the presence of a recirculation branch in the fluidic conduit for dispensing the hot water, the hot water dispensing time is reduced. In other words, the possibility of always providing a certain amount of preheated water, allows applying only a minimum final heating, to bring such water to the dispensing temperature and consequently, with the same power as the heating device, the present dispensing group allows dispensing a greater flow of water at the dispensing temperature in a shorter time.

Thereby, the delay - waiting time - between the dispensing command and the effective dispensing is delayed.

Moreover, in relation to such an advantage, note the convenience of being able to use a heater with reduced power with respect to the heaters used in the prior art, for providing hot water at the same dispensing temperature.

Finally, advantageously, the use of a fluidic collection conduit in the fluidic hot water dispensing branch, suitable for transmitting heat by conduction, allows utilizing the heat of combustion of the preheated water stored in such a collection conduit for heating further parts of the dispensing group or the coffee machine, e.g., for heating a cup holder plate, so as to provide preheated mugs and cups ready to receive the hot beverages.

It is apparent that, in order to meet specific needs, those skilled in the art may make variations to the embodiments of the aforesaid dispensing group and the aforesaid coffee machine, or replace elements with others which are functionally equivalent.

Such variations are also contained within the scope of protection as defined by the following claims.

### List of reference signs:

1 dispensing group
11 first fluidic conduit
12 second fluidic conduit
110 main branch
115 recirculation branch
120 preheating stretch
21 first water inlet opening
22 second water inlet opening
200 discharge branch
31 hot water dispensing opening
32 steam dispensing opening
300 emission node
41 first heating device
42 second heating device
50 tank
500 collection conduit
501 first end
502 second end
510 linear stretches
512 curvilinear stretches
550 exchange wall
61 first pump
62 second pump
600 cup holder unit
650 heating chamber
680 cup holder plate
71 flow regulating element
72 overpressure relief valve
73 regulating valve
74 non-return valves
75 electronic control unit
78 steam regulating element
700 hot water temperature sensor
702 steam temperature sensors
8 flow rate measurer
9 connection conduit
90 first end
99 second end
1000 coffee machine
L storage length
X prevalent flow direction
D transverse dimension

## Claims

1. A dispensing group (1) for dispensing hot water and steam, comprising:
- a first fluidic conduit (11) comprising a main branch (110) extending between a first water inlet opening (21) and a hot water dispensing opening (31) and which is suitable for receiving water through said first water inlet opening (21) and allowing said water to flow towards said hot water dispensing opening (31);
- a first heating device (41), operatively connected to said main branch (110) and suitable for heating the water flowing into said main branch (110) before it reaches said hot water dispensing opening (31);
- a second fluidic conduit (12) extending between a second water inlet opening (22) and a steam dispensing opening (32), said second fluidic conduit (12) being suitable for receiving water through said second water inlet opening (22) and allowing said water to flow towards said steam dispensing opening (32);
- a second heating device (42), operatively connected to said second fluidic conduit (12) and suitable for heating the water flowing into said second fluidic conduit (22) to generate steam, before it reaches said steam dispensing opening (32);
**characterized in that** the first fluidic conduit (11) comprises a recirculation branch (115), which fluidically originates from said main branch (110) downstream of the first heating device (41) and upstream of the hot water dispensing opening (31) and which is fluidically reintroduced into said main branch (110) upstream of said first heating device (41),
and wherein said first fluidic conduit (11) and said second fluidic conduit (12) are fluidically and thermally separate from each other in the path thereof respectively between the first water inlet opening (21) and the hot water dispensing opening (31) and between the second water inlet opening (22) and the steam dispensing opening (32).

2. Dispensing group (1) according to any one of the preceding claims, wherein the first fluidic conduit (11) comprises a first pump (61), preferably a rotary pump, installed upstream of the first heating device (41) and suitable for pushing water into the main branch (110) towards said first heating device (41).

3. Dispensing group (1) according to claim 2, wherein the recirculation branch (115) is reintroduced into the main branch (110) upstream of said first pump (61).

4. Dispensing group (1) according to any one of the preceding claims, wherein the main branch (110) comprises an emission node (300) downstream of the first heating device (41) and upstream of the hot water dispensing opening (31), wherein the recirculation branch (115) fluidically originates from the main branch (110) at said emission node (300), and wherein the first fluidic conduit (11) comprises a flow regulating element (71) in correspondence of said emission node (300), suitable for regulating the water flow from the main branch (110) towards the hot water dispensing opening (31) or towards the recirculation branch (115).

5. Dispensing group (1) according to the preceding claim, comprising an electronic control unit (75) operatively connected to said flow regulating element (71) and configured to process and send, to said flow regulating element (71):
- a dispensing signal for allowing the passage of water from the main branch (110) towards the hot water dispensing opening (31); or
- a recirculation signal for allowing the passage of water from the main branch (110) towards the recirculation branch (115).

6. Dispensing group (1) according to any one of the preceding claims, comprising a connection conduit (9) having a first end (90) fluidically connected to a tank (50) suitable for containing water, and a second end (99) fluidically connected to the first fluidic conduit (11) and second fluidic conduit (12) by means of the first (21) and second water inlet openings (22), respectively, said connection conduit (9) being suitable for indirectly connecting the first fluidic conduit (11) and the second fluidic conduit (12) to the tank (50).

7. Dispensing group (1) according to any one of the preceding claims, comprising a flow rate measurer (8) installed on the first fluidic conduit (11).

8. Dispensing group (1) according to claim 2, wherein the main branch (110) comprises a collection conduit (500), interposed between the first pump (61) and the first heating device (41), suitable for accumulating hot water heated by the heating device (41) and reintroduced into the main branch (110) by means of the recirculation branch (115),
said collection conduit (500) being at least partially thermally conductive to allow the transmission of heat of the heated hot water accumulated in the collection conduit (500), towards the environment.

9. Dispensing group (1) according to the preceding claim, wherein the collection conduit (500) is a tube extending for a collection length (L) along a prevalent flow direction (X) and having a cross-section on a plane transversal to said prevalent flow direction (X) defined by a transversal dimension (D), wherein said collection length (L) is much greater than said transversal dimension (D).

10. Dispensing group (1) according to the preceding claim, wherein the collection length (L) is at least ten times the transversal dimension (D), preferably at least fifty times the transversal dimension (D), even more preferably, at least one hundred times the transversal dimension (D).

11. Dispensing group (1) according to claim 8 or 9 or 10, wherein the collection conduit (500) has a snakelike development, i.e., it forms a fluidic serpentine, comprising linear stretches (510) interspersed with curvilinear stretches (520).

12. Dispensing group (1) according to any one of claims 8 to 11, comprising a cup holder unit (600) positioned in proximity of the collection conduit (500) so that the heating of at least one surface of said cup holder unit (600) is allowed by means of the transmission of heat from the water contained in said collection conduit (500) towards said cup holder unit (600).

13. Dispensing group (1) according to any one of claims 8 to 12, wherein the second fluidic conduit (12) comprises a preheating stretch (120) passing in proximity of the collection conduit (500) and wherein the collection conduit (500) allows heat to be transferred from the preheated water therein, to the preheating stretch (120), so as to generate a certain preheating also of the water flowing into the second fluidic conduit (12).

14. A coffee machine (1000) comprising a coffee dispensing unit and a hot water and steam dispensing group (1) according to any one of the preceding claims.

15. A method of recirculating pre-heated water comprising the following steps:
a) providing a dispensing group (1) according to any one of claims 1 to 13;
b) allowing water to pass into the main branch (110) from the first water inlet opening (21) towards the hot water dispensing opening (31);
c) by means of the first heating device (41), pre-heating the water flowing into said main branch (110) to generate an amount of water pre-heated at a predetermined pre-heating temperature;
d) blocking the passage of said amount of preheated water towards the hot water dispensing opening (31) and allowing said amount of preheated water to pass from the main branch (110), downstream of the first heating device (41), into the recirculation branch (115);
e) re-introducing said amount of water pre-heated water from the recirculation branch (115) into the main branch (110) upstream of said first heating device (41).

16. A method of dispensing hot water, comprising the following steps:
f) performing a method of recirculating pre-heated water according to claim 15;
g) providing an electronic control unit (75) operatively connected to the dispensing group (1);
h) by means of the electronic control unit (75), preferably in response to a hot water dispensing command sent by a user, preferably by means of a user interface, sending a hot water dispensing signal to the dispensing group (1);
i) as a function of said hot water dispensing signal, by means of the first heating device (41), performing a final heating of a volume of water to be dispensed comprising the amount of preheated water reintroduced into the main branch (110) and/or an amount of unheated water entering the main branch (110) from the first water inlet opening (21) to bring it to a predetermined dispensing temperature;
j) allowing the passage of water heated to the predetermined dispensing temperature through the hot water dispensing opening (31).

17. Method of dispensing hot water according to the preceding claim, wherein step i) comprises the following sub-steps:
i1) providing a temperature sensor (700) suitable for detecting the temperature of the water at the first heating device (41) and operatively connected to the electronic control unit (75);
i2) by means of the electronic control unit (75), making a comparison between the temperature detected by said temperature sensor and a minimum preheating temperature;
i3) as a function of said comparison, performing one of the following actions:
i31) if the temperature detected is greater than or equal to said minimum preheating temperature, heating the water by means of the first heating device (41) on a maximum water flow rate, to bring it to the dispensing temperature;
i32) if the temperature detected is less than the minimum preheating temperature, heating the water by means of the first heating device (41) on a water flow rate that is lower than the maximum flow rate, to bring it to the dispensing temperature.

18. Method of dispensing hot water, according to claim 16 or 17, preferably comprising, after step j), actuating the recirculation method according to claim 15 again, so as to immediately provide an amount of preheated water for a successive dispensing.

## Patentansprüche

1. Ausgabegruppe (1) zur Ausgabe von Heißwasser und Dampf, umfassend:
- eine erste Fluidleitung (11), die einen Hauptzweig (110) umfasst, der sich zwischen einer ersten Wassereinlassöffnung (21) und einer Heißwasserausgabeöffnung (31) erstreckt und der dazu geeignet ist, Wasser durch die erste Wassereinlassöffnung (21) aufzunehmen und das Wasser in Richtung der Heißwasserausgabeöffnung (31) fließen zu lassen;
- eine erste Heizvorrichtung (41), die funktional mit dem Hauptzweig (110) verbunden und dazu geeignet ist, das in den Hauptzweig (110) fließende Wasser zu erwärmen, bevor es die Heißwasserausgabeöffnung (31) erreicht;
- eine zweite Fluidleitung (12), die sich zwischen einer zweiten Wassereinlassöffnung (22) und einer Dampfausgabeöffnung (32) erstreckt, wobei die zweite Fluidleitung (12) dazu geeignet ist, Wasser durch die zweite Wassereinlassöffnung (22) aufzunehmen und das Wasser in Richtung der Dampfausgabeöffnung (32) fließen zu lassen;
- eine zweite Heizvorrichtung (42), die funktional mit der zweiten Fluidleitung (12) verbunden und dazu geeignet ist, das in die zweite Fluidleitung (12) fließende Wasser zu erwärmen, um Dampf zu erzeugen, bevor es die Dampfausgabeöffnung (32) erreicht;
**dadurch gekennzeichnet, dass**
die erste Fluidleitung (11) einen Rezirkulationszweig (115) umfasst, der fluidisch stromabwärts der ersten Heizvorrichtung (41) und stromaufwärts der Heißwasserausgabeöffnung (31) von dem Hauptzweig (110) ausgeht und der fluidisch stromaufwärts der ersten Heizvorrichtung (41) wieder in den Hauptzweig (110) eingeleitet wird,
und wobei die erste Fluidleitung (11) und die zweite Fluidleitung (12) in deren Weg jeweils zwischen der ersten Wassereinlassöffnung (21) und der Heißwasserausgabeöffnung (31) bzw. zwischen der zweiten Wassereinlassöffnung (22) und der Dampfausgabeöffnung (32) fluidisch und thermisch voneinander getrennt sind.

2. Ausgabegruppe (1) nach einem der vorhergehenden Ansprüche, wobei die erste Fluidleitung (11) eine erste Pumpe (61), vorzugsweise eine Rotationspumpe, umfasst, die stromaufwärts der ersten Heizvorrichtung (41) installiert und dazu geeignet ist, Wasser in den Hauptzweig (110) in Richtung der ersten Heizvorrichtung (41) zu drücken.

3. Ausgabegruppe (1) nach Anspruch 2, wobei der Rezirkulationszweig (115) stromaufwärts der ersten Pumpe (61) wieder in den Hauptzweig (110) eingeleitet wird.

4. Ausgabegruppe (1) nach einem der vorhergehenden Ansprüche, wobei der Hauptzweig (110) einen Emissionsknoten (300) stromabwärts der ersten Heizvorrichtung (41) und stromaufwärts der Heißwasserausgabeöffnung (31) umfasst, wobei der Rezirkulationszweig (115) an dem Emissionsknoten (300) fluidisch von dem Hauptzweig (110) ausgeht und wobei die erste Fluidleitung (11) ein Durchflussregulierungselement (71) in Entsprechung zu dem Emissionsknoten (300) umfasst, das dazu geeignet ist, den Wasserfluss von dem Hauptzweig (110) in Richtung der Heißwasserausgabeöffnung (31) oder in Richtung des Rezirkulationszweigs (115) zu regulieren.

5. Ausgabegruppe (1) nach dem vorhergehenden Anspruch, umfassend eine elektronische Steuereinheit (75), die funktional mit dem Durchflussregulierungselement (71) verbunden und konfiguriert ist, um Folgendes zu verarbeiten und an das Durchflussregulierungselement (71) zu senden:
- ein Ausgabesignal, um den Durchgang von Wasser aus dem Hauptzweig (110) in Richtung der Heißwasserausgabeöffnung (31) zu ermöglichen; oder
- ein Rezirkulationssignal, um den Durchgang von Wasser aus dem Hauptzweig (110) in Richtung des Rezirkulationszweigs (115) zu ermöglichen.

6. Ausgabegruppe (1) nach einem der vorhergehenden Ansprüche, umfassend eine Verbindungsleitung (9) mit einem ersten Ende (90), das fluidisch mit einem Tank (50) verbunden ist, der zum Aufnehmen von Wasser geeignet ist, und einem zweiten Ende (99), das fluidisch mit der ersten Fluidleitung (11) bzw. der zweiten Fluidleitung (12) mittels der ersten (21) und zweiten Wassereinlassöffnung (22) verbunden ist, wobei die Verbindungsleitung (9) dazu geeignet ist, die erste Fluidleitung (11) und die zweite Fluidleitung (12) indirekt mit dem Tank (50) zu verbinden.

7. Ausgabegruppe (1) nach einem der vorhergehenden Ansprüche, umfassend einen Durchflussmengenmesser (8), der an der ersten Fluidleitung (11) installiert ist.

8. Ausgabegruppe (1) nach Anspruch 2, wobei der Hauptzweig (110) eine Sammelleitung (500) umfasst, die zwischen der ersten Pumpe (61) und der ersten Heizvorrichtung (41) angeordnet ist und dazu geeignet ist, Heißwasser zu speichern, das von der Heizvorrichtung (41) erwärmt und mittels des Rezirkulationszweigs (115) wieder in den Hauptzweig (110) eingeleitet wurde,
wobei die Sammelleitung (500) zumindest teilweise wärmeleitfähig ist, um die Übertragung von Wärme des in der Sammelleitung (500) gespeicherten erwärmten Heißwassers an die Umgebung zu ermöglichen.

9. Ausgabegruppe (1) nach dem vorhergehenden Anspruch, wobei die Sammelleitung (500) ein Rohr ist, das sich über eine Sammellänge (L) entlang einer Hauptströmungsrichtung (X) erstreckt und einen Querschnitt in einer Ebene quer zu der Hauptströmungsrichtung (X) aufweist, der durch eine Querabmessung (D) definiert ist, wobei die Sammellänge (L) viel größer als die Querabmessung (D) ist.

10. Ausgabegruppe (1) nach dem vorhergehenden Anspruch, wobei die Sammellänge (L) mindestens das Zehnfache der Querabmessung (D) beträgt, vorzugsweise mindestens das Fünfzigfache der Querabmessung (D), noch bevorzugter mindestens das Hundertfache der Querabmessung (D).

11. Ausgabegruppe (1) nach Anspruch 8 oder 9 oder 10, wobei die Sammelleitung (500) einen schlangenförmigen Verlauf aufweist, d. h. eine fluidische Serpentine bildet, die lineare Abschnitte (510) umfasst, die mit krummlinigen Abschnitten (520) durchsetzt sind.

12. Ausgabegruppe (1) nach einem der Ansprüche 8 bis 11, umfassend eine Tassenhaltereinheit (600), die in der Nähe der Sammelleitung (500) positioniert ist, so dass die Erwärmung mindestens einer Oberfläche der Tassenhaltereinheit (600) mittels der Übertragung von Wärme von dem in der Sammelleitung (500) enthaltenen Wasser in Richtung der Tassenhaltereinheit (600) ermöglicht wird.

13. Ausgabegruppe (1) nach einem der Ansprüche 8 bis 12, wobei die zweite Fluidleitung (12) einen Vorwärmabschnitt (120) umfasst, der in der Nähe der Sammelleitung (500) verläuft, und wobei die Sammelleitung (500) ermöglicht, dass Wärme von dem darin befindlichen vorgewärmten Wasser auf den Vorwärmabschnitt (120) übertragen wird, um eine gewisse Vorwärmung auch des in die zweite Fluidleitung (12) fließenden Wassers zu erzeugen.

14. Kaffeemaschine (1000), umfassend eine Kaffeeausgabeeinheit und eine Heißwasser- und Dampfausgabegruppe (1) nach einem der vorhergehenden Ansprüche.

15. Verfahren zur Rezirkulation von vorgewärmtem Wasser, das die folgenden Schritte umfasst:
a) Bereitstellen einer Ausgabegruppe (1) nach einem der Ansprüche 1 bis 13;
b) Ermöglichen, dass Wasser aus der ersten Wassereinlassöffnung (21) in den Hauptzweig (110) in Richtung der Heißwasserausgabeöffnung (31) fließen kann;
c) mittels der ersten Heizvorrichtung (41), Vorwärmen des in den Hauptzweig (110) fließenden Wassers, um eine Menge an Wasser zu erzeugen, das auf eine vorbestimmte Vorwärmtemperatur vorgewärmt ist;
d) Blockieren des Durchgangs der Menge an vorgewärmtem Wasser in Richtung der Heißwasserausgabeöffnung (31) und Ermöglichen, dass die Menge an vorgewärmtem Wasser aus dem Hauptzweig (110) stromabwärts der ersten Heizvorrichtung (41) in den Rezirkulationszweig (115) fließt;
e) Wiedereinleiten der Menge an vorgewärmtem Wasser aus dem Rezirkulationszweig (115) in den Hauptzweig (110) stromaufwärts der ersten Heizvorrichtung (41).

16. Verfahren zur Ausgabe von Heißwasser, das die folgenden Schritte umfasst:
f) Durchführen eines Verfahrens zur Rezirkulation von vorgewärmtem Wasser nach Anspruch 15;
g) Bereitstellen einer elektronischen Steuereinheit (75), die funktional mit der Ausgabegruppe (1) verbunden ist;
h) mittels der elektronischen Steuereinheit (75), vorzugsweise als Reaktion auf einen von einem Benutzer gesendeten Heißwasserausgabebefehl, vorzugsweise mittels einer Benutzerschnittstelle, Senden eines Heißwasserausgabesignals an die Ausgabegruppe (1);
i) in Abhängigkeit von dem Heißwasserausgabesignal, Durchführen einer abschließenden Erwärmung eines abzugebenden Wasservolumens mittels der ersten Heizvorrichtung (41), das die in den Hauptzweig (110) wieder eingeleitete Menge an vorgewärmtem Wasser und/oder eine Menge an nicht erwärmtem Wasser umfasst, das aus der ersten Wassereinlassöffnung (21) in den Hauptzweig (110) eintritt, um es auf eine vorbestimmte Ausgabetemperatur zu bringen;
j) Ermöglichen des Durchgangs von auf die vorbestimmte Ausgabetemperatur erwärmtem Wasser durch die Heißwasserausgabeöffnung (31).

17. Verfahren zur Ausgabe von Heißwasser nach dem vorhergehenden Anspruch, wobei Schritt i) die folgenden Teilschritte umfasst:
i1) Bereitstellen eines Temperatursensors (700), der dazu geeignet ist, die Temperatur des Wassers an der ersten Heizvorrichtung (41) zu erfassen und funktional mit der elektronischen Steuereinheit (75) verbunden ist;
i2) mittels der elektronischen Steuereinheit (75), Durchführen eines Vergleichs zwischen der von dem Temperatursensor erfassten Temperatur und einer Mindestvorwärmtemperatur;
i3) in Abhängigkeit von dem Vergleich, Durchführen eines der folgenden Vorgänge:
i31) wenn die erfasste Temperatur höher als oder gleich der Mindestvorwärmtemperatur ist, Erwärmen des Wassers mittels der ersten Heizvorrichtung (41) bei einer maximalen Wasserdurchflussrate, um es auf die Ausgabetemperatur zu bringen;
i32) wenn die erfasste Temperatur niedriger als die Mindestvorwärmtemperatur ist, Erwärmen des Wassers mittels der ersten Heizvorrichtung (41) bei einer Wasserdurchflussrate, die niedriger als die maximale Durchflussrate ist, um es auf die Ausgabetemperatur zu bringen.

18. Verfahren zur Ausgabe von Heißwasser nach Anspruch 16 oder 17, vorzugsweise umfassend, nach Schritt j), das erneute Betätigen des Rezirkulationsverfahrens nach Anspruch 15, um sofort eine Menge an vorgewärmtem Wasser für eine nachfolgende Ausgabe bereitzustellen.

## Revendications

1. Groupe de distribution (1) pour distribuer de l'eau chaude et de la vapeur, comprenant :
- un premier conduit de fluide (11) comprenant une branche principale (110) s'étendant entre une première ouverture d'entrée d'eau (21) et une ouverture de distribution d'eau chaude (31) et qui est approprié pour recevoir de l'eau à travers ladite première ouverture d'entrée d'eau (21) et permettre à ladite eau de s'écouler vers ladite ouverture de distribution d'eau chaude (31) ;
- un premier dispositif de chauffage (41), fonctionnellement relié à ladite branche principale (110) et approprié pour chauffer l'eau s'écoulant dans ladite branche principale (110) avant qu'elle n'atteigne ladite ouverture de distribution d'eau chaude (31) ;
- un deuxième conduit de fluide (12) s'étendant entre une deuxième ouverture d'entrée d'eau (22) et une ouverture de distribution de vapeur (32), ledit deuxième conduit de fluide (12) étant approprié pour recevoir de l'eau à travers ladite deuxième ouverture d'entrée d'eau (22) et permettant à ladite eau de s'écouler vers ladite ouverture de distribution de vapeur (32) ;
- un deuxième dispositif de chauffage (42), fonctionnellement relié audit deuxième conduit de fluide (12) et approprié pour chauffer l'eau s'écoulant dans ledit deuxième conduit de fluide (12) afin de générer de la vapeur, avant qu'elle n'atteigne ladite ouverture de distribution de vapeur (32) ;
**caractérisé en ce que**
le premier conduit de fluide (11) comprend une branche de recirculation (115), qui provient fluidiquement de ladite branche principale (110) en aval du premier dispositif de chauffage (41) et en amont de l'ouverture de distribution d'eau chaude (31) et qui est réintroduite fluidiquement dans ladite branche principale (110) en amont dudit premier dispositif de chauffage (41),
et dans lequel ledit premier conduit de fluide (11) et ledit deuxième conduit de fluide (12) sont séparés fluidiquement et thermiquement l'un de l'autre dans leur trajet respectivement entre la première ouverture d'entrée d'eau (21) et l'ouverture de distribution d'eau chaude (31) et entre la deuxième ouverture d'entrée d'eau (22) et l'ouverture de distribution de vapeur (32).

2. Groupe de distribution (1) selon l'une quelconque des revendications précédentes, dans lequel le premier conduit de fluide (11) comprend une première pompe (61), de préférence une pompe rotative, installée en amont du premier dispositif de chauffage (41) et appropriée pour pousser l'eau dans la branche principale (110) vers ledit premier dispositif de chauffage (41).

3. Groupe de distribution (1) selon la revendication 2, dans lequel la branche de recirculation (115) est réintroduite dans la branche principale (110) en amont de ladite première pompe (61).

4. Groupe de distribution (1) selon l'une quelconque des revendications précédentes, dans lequel la branche principale (110) comprend un nœud d'émission (300) en aval du premier dispositif de chauffage (41) et en amont de l'ouverture de distribution d'eau chaude (31), dans lequel la branche de recirculation (115) provient fluidiquement de la branche principale (110) au niveau dudit nœud d'émission (300), et dans lequel le premier conduit de fluide (11) comprend un élément de régulation de débit (71) en correspondance avec ledit nœud d'émission (300), approprié pour réguler le débit d'eau de la branche principale (110) vers l'ouverture de distribution d'eau chaude (31) ou vers la branche de recirculation (115).

5. Groupe de distribution (1) selon la revendication précédente, comprenant une unité de commande électronique (75) fonctionnellement reliée audit élément de régulation de débit (71) et configurée pour traiter et envoyer, audit élément de régulation de débit (71) :
- un signal de distribution, pour permettre le passage de l'eau de la branche principale (110) vers l'ouverture de distribution d'eau chaude (31) ; ou
- un signal de recirculation pour permettre le passage de l'eau de la branche principale (110) vers la branche de recirculation (115).

6. Groupe de distribution (1) selon l'une quelconque des revendications précédentes, comprenant un conduit de raccordement (9) ayant une première extrémité (90) reliée fluidiquement à un réservoir (50) approprié pour contenir de l'eau, et une deuxième extrémité (99) reliée fluidiquement au premier conduit de fluide (11) et au deuxième conduit de fluide (12) au moyen des première (21) et deuxième ouvertures d'entrée d'eau (22), respectivement, ledit conduit de raccordement (9) étant approprié pour relier indirectement le premier conduit de fluide (11) et le deuxième conduit de fluide (12) au réservoir (50).

7. Groupe de distribution (1) selon l'une quelconque des revendications précédentes, comprenant un débitmètre (8) installé sur le premier conduit de fluide (11).

8. Groupe de distribution (1) selon la revendication 2, dans lequel la branche principale (110) comprend un conduit de collecte (500), interposé entre la première pompe (61) et le premier dispositif de chauffage (41), approprié pour accumuler de l'eau chaude chauffée par le dispositif de chauffage (41) et réintroduite dans la branche principale (110) au moyen de la branche de recirculation (115),
ledit conduit de collecte (500) étant au moins partiellement conducteur thermique pour permettre la transmission de la chaleur de l'eau chaude chauffée accumulée dans le conduit de collecte (500), vers l'environnement.

9. Groupe de distribution (1) selon la revendication précédente, dans lequel le conduit de collecte (500) est un tube s'étendant sur une longueur de collecte (L) le long d'une direction d'écoulement prédominante (X) et ayant une section transversale sur un plan transversal à ladite direction d'écoulement prédominante (X) défini par une dimension transversale (D), dans lequel ladite longueur de collecte (L) est beaucoup plus grande que ladite dimension transversale (D).

10. Groupe de distribution (1) selon la revendication précédente, dans lequel la longueur de collecte (L) est au moins dix fois la dimension transversale (D), de préférence au moins cinquante fois la dimension transversale (D), encore plus préférablement, au moins cent fois la dimension transversale (D).

11. Groupe de distribution (1) selon la revendication 8 ou 9 ou 10, dans lequel le conduit de collecte (500) a un développement en serpentin, c'est-à-dire qu'il forme un serpentin fluidique, comprenant des tronçons linéaires (510) entremêlés de tronçons curvilignes (520).

12. Groupe de distribution (1) selon l'une quelconque des revendications 8 à 11, comprenant une unité porte-tasse (600) positionnée à proximité du conduit de collecte (500) de sorte que le chauffage d'au moins une surface de ladite unité porte-tasse (600) est permis au moyen de la transmission de chaleur de l'eau contenue dans ledit conduit de collecte (500) vers ladite unité porte-tasse (600).

13. Groupe de distribution (1) selon l'une quelconque des revendications 8 à 12, dans lequel le deuxième conduit de fluide (12) comprend un tronçon de préchauffage (120) passant à proximité du conduit de collecte (500) et dans lequel le conduit de collecte (500) permet de transférer de la chaleur depuis l'eau préchauffée s'y trouvant vers le tronçon de préchauffage (120), de manière à générer un certain préchauffage également de l'eau s'écoulant dans le deuxième conduit de fluide (12).

14. Machine à café (1000) comprenant une unité de distribution de café et un groupe de distribution d'eau chaude et de vapeur (1) selon l'une quelconque des revendications précédentes.

15. Procédé de recirculation d'eau préchauffée comprenant les étapes suivantes :
a) prévoir un groupe de distribution (1) selon l'une quelconque des revendications 1 à 13 ;
b) permettre à l'eau de passer dans la branche principale (110) de la première ouverture d'entrée d'eau (21) vers l'ouverture de distribution d'eau chaude (31) ;
c) au moyen du premier dispositif de chauffage (41), préchauffer l'eau s'écoulant dans ladite branche principale (110) pour générer une quantité d'eau préchauffée à une température de préchauffage prédéterminée ;
d) bloquer le passage de ladite quantité d'eau préchauffée vers l'ouverture de distribution d'eau chaude (31) et permettre à ladite quantité d'eau préchauffée de passer de la branche principale (110), en aval du premier dispositif de chauffage (41), dans la branche de recirculation (115) ;
e) réintroduire ladite quantité d'eau eau préchauffée de la branche de recirculation (115) dans la branche principale (110) en amont dudit premier dispositif de chauffage (41).

16. Procédé de distribution d'eau chaude, comprenant les étapes suivantes :
f) mettre en œuvre un procédé de recirculation d'eau préchauffée selon la revendication 15 ;
g) fournir une unité de commande électronique (75) fonctionnellement reliée au groupe de distribution (1) ;
h) au moyen de l'unité de commande électronique (75), de préférence en réponse à une commande de distribution d'eau chaude envoyée par un utilisateur, de préférence au moyen d'une interface utilisateur, envoyer un signal de distribution d'eau chaude au groupe de distribution (1) ;
i) en fonction dudit signal de distribution d'eau chaude, au moyen du premier dispositif de chauffage (41), effectuer un chauffage final d'un volume d'eau à distribuer comprenant la quantité d'eau préchauffée réintroduite dans la branche principale (110) et/ou une quantité d'eau non chauffée entrant dans la branche principale (110) à partir de la première ouverture d'entrée d'eau (21) pour l'amener à une température de distribution prédéterminée ;
j) permettre le passage de l'eau chauffée à la température de distribution prédéterminée à travers l'ouverture de distribution d'eau chaude (31).

17. Procédé de distribution d'eau chaude selon la revendication précédente, dans lequel l'étape i) comprend les sous-étapes suivantes :
i1) prévoir un capteur de température (700) approprié pour détecter la température de l'eau au niveau du premier dispositif de chauffage (41) et relié fonctionnellement à l'unité de commande électronique (75) ;
i2) au moyen de l'unité de commande électronique (75), faire une comparaison entre la température détectée par ledit capteur de température et une température de préchauffage minimale ;
i3) en fonction de ladite comparaison, effectuer l'une des actions suivantes :
i31) si la température détectée est supérieure ou égale à ladite température minimale de préchauffage, chauffer l'eau au moyen du premier dispositif de chauffage (41) à un débit d'eau maximal, pour l'amener à la température de distribution ;
i32) si la température détectée est inférieure à la température minimale de préchauffage, chauffer l'eau au moyen du premier dispositif de chauffage (41) à un débit d'eau inférieur au débit maximal, pour l'amener à la température de distribution.

18. Procédé de distribution d'eau chaude, selon la revendication 16 ou 17, comprenant de préférence, après l'étape j), l'actionnement à nouveau du procédé de recirculation selon la revendication 15, de manière à fournir immédiatement une quantité d'eau préchauffée pour une distribution successive.
